# EUROPEAN PATENT SPECIFICATION

(11) **EP 0 491 406 B1**
(45) Date of publication and mention of the grant of the patent: **07.12.1994**
(21) Application number: 91201800.9
(22) Date of filing: 11.07.1991
(51) Int. Cl.: C09K 11/02, C09K 11/77

(54) **Red pigment coated phosphor and method for manufacturing the same**
Mit Pigment überzogener roter Leuchtstoff und Verfahren zur Herstellung desselben
Luminophore rouge revêtu de pigments et procédé de sa fabrication

(30) Priority: 15.12.1990 KR 9020710
(43) Date of publication of application: 24.06.1992
(73) Proprietor: SAMSUNG DISPLAY DEVICES CO., LTD., Hwaseong-gun, Kyungki-do (KR)
(72) Inventor: Choi, Jong-sik, Jangan-ku, Suwon, Kyunggi-do (KR); Jeong, Il-hyeok, Seodaemun-ku, Seoul (KR); Park, Man-gi, Puk-ku, Pusan (KR)
(74) Representative: Lips, Hendrik Jan George, Ir.

(56) References cited:
- EP-A- 0 019 710
- PATENT ABSTRACTS OF JAPAN, unexamined applications, C section, vol. 3, no. 14, February 8, 1979, THE PATENT OFFICE JAPANESE GOVERNMENT, page 9 C 36
- PATENT ABSTRACTS OF JAPAN, unexamined applications, C field, vol. 5, no. 45, March 25, 1981, THE PATENT OFFICE JAPANESE GOVERNMENT, page 151 C 48

## Description

The present invention relates to a red pigment coated phosphor and method for manufacturing the same, more particularly to a red pigment coated phosphor of high luminance and high contrast for a cathode ray tube and method for manufacturing the same.

### Background of the Invention

As is well known in the art, adhesion of red pigment particles, green pigment particles or blue pigment particles to the respective surfaces of red emitting phosphor particles, green emitting phosphor particles or blue emitting phosphor particles used in a cathode ray tube for a color television, markedly enhances the contrast of an image formed on the cathode ray tube, because a part of the visible region of the emitted spectra inherent to the uncoated phosphor is absorbed due to the filter effect of the pigment particles adhering thereto, resulting in a clearer emission color. Further, the pigment particles can absorb a part of the external light to reduce the reflection of light therefrom.

Pigments for pigment coated phosphors are well known. A suitable pigment for blue-emitting phosphors such as ZnS:Ag and ZnS:Ag, Cl can be ultramarine (3NaAl.SiO₂.Na₂S₂), Prussian blue {Fe₄[Fe(CN)₆]₃.nH₂O}, cobalt blue (CoO.nAl₂O₃) or cupric sulfide (CuS) and a suitable pigment for red-emitting phosphors such as Y₂O₂S:Eu, YVO₄:Eu and Y₂O₃:Eu can be iron oxide (Fe₂O₃), cadmium sulfoselenide [Cd(S₁₋ₓ, Seₓ), 0<x<1] or cuprous oxide (Cu₂O). When it is desired to apply a pigment to green-emitting phosphors such as ZnS:Cu, Al and (Zn, Cd)S:Cu, a suitable pigment can be chromic oxide (Cr₂O₃) or cobalt green (CoO.nZnO).

Among the pigments widely used for red-emitting phosphors, iron oxide (Fe₂O₃) is a very practical pigment because it is heat-proof, acid-resistant and base-resistant, it has an excellent filter effect and it does no harm to the human body. However. it's non-luminous character deteriorates luminance and color purity of the pigmented phosphor and it is accompanied by a difficulty in color control.

In Japanese Laid-Open Patent Publication No. Sho 53-137087, the Y₂O₂S:Eu red-emitting phosphor was coated with (M,In)₂O₂S:Eu pigment (wherein, M was at least one selected from the group consisting of Y, La and Gd), or was mixed with the pigment resulting in contrast enhancement. However, luminance was not increased.

In Japanese Laid-Open Patent Publication No. Sho 56-875, a method for manufacturing a pigment coated phosphor employing InS-based complex material as a pigment was disclosed. It comprised the steps of mixing Indium oxide, Na₂CO₃ and sulfur, and baking at a temperature from 700 to 900°C for 1 to 2 hours under oxidizing atmosphere to coat the phosphor with a complex compound of Indium sulfide and sodium sulfate. However, the phosphor obtained by the above-mentioned method had a defect of luminance deterioration owing to the heat-treatment at high temperature and coating the phosphors with the non-luminous complex pigment particles.

### Summary of the Invention

An object of the present invention, considering the above-mentioned defects, is to provide a red pigment coated phosphor which has excellent emitting characteristics and has an easiness in color control when comparing with the pigment coated phosphor employing the conventional Fe₂O₃ as a pigment.

Another object of the invention is to provide a method for manufacturing said red pigment coated phosphor.

To accomplish the above-mentioned object, the present invention provides a red pigment coated phosphor comprising a red phosphor and pigment particles which are coated on the surface of said phosphor, wherein said pigment is a mixture of Indium sulfide (In₂S₃) and europium activated yttrium oxysulfide (Y₂O₂S:Eu).

To accomplish another object, the present invention provides a method for manufacturing a red pigment coated phosphor comprising a step of adding pigment particles and a binder to a red-emitting phosphor, wherein the method includes following steps of dry mixing indium oxide, yttrium oxide and europium oxide and baking the mixture at a temperature range of 700 to 950°C for 2 to 8 hours under H₂S atmosphere.

One of the important characteristics is using an acryl emulsion as a binder to coat the phosphor with pigment particles.

Preferred red-emitting phosphors are Y₂O₂S:Eu, YVO₄:Eu and Y₂O₃:Eu, and preferred mixing ratio of starting materials of the pigment is as follows. Depending on the In₂O₃ amount of from 17 to 83 weight percent, the Y₂O₃ amount varies from 83 to 17 weight percent based on the sum of the starting materials, In₂O₃ and Y₂O₃. The preferable amount of the pigment is within 0.1 to 10 weight percent based on the phosphor per se.

Especially, said baking is preferably carried out at a temperature range of from 700 to 950°C for 2 to 8 hours, and the preferred amount of a europium oxide added is from 0.1 to 9 weight percent based on yttrium oxide. A more preferred amount is from 3 to 6 weight percent.

### Brief Description of the Drawings

Figure 1A illustrates a XRD diffraction pattern of a crystal phase of pigment particles according to the present invention.

Figure 1B illustrates a XRD diffraction pattern of a crystal phase of In₂S₃ recorded in the JCPDS-file as a standard material.

Figure 1C illustrates a XRD diffraction pattern of a crystal phase of Y₂O₂S recorded in the JCPDS-file as a standard material.

Figures 2 and 4 are graphs showing the relationship between the reflectances and the wavelengths of Fe₂O₃ and of pigment particles according to the present invention, respectively.

Figures 3 and 5 illustrate color point regions of Fe₂O₃ and of pigment particles of the present invention, on the coordinates of the Standard Chromaticity Diagram System CIE when exposed to the standard D65 light.

Figure 6 is a graph showing the relationship between the reflectances and the wavelengths of Y₂O₂S:Eu phosphor coated with Fe₂O₃ and with pigment particles according to the present invention.

### Description of the Preferred Embodiments

The invention will be described in detail below.

### (1) manufacturing of red pigment particles.

First, 17 to 83 weight percent of yttrium oxide and 83 to 17 weight percent of indium oxide based on the total amount of yttrium oxide and indium oxide are prepared and dry mixed. When choosing 50 weight percent of yttrium oxide and 50 weight percent of indium oxide as a standard amount, the smaller quantity of yttrium oxide results in the redder body color and the weaker emission intensity of the pigment particles, and the more quantity of yttrium oxide results in the lighter red or orange body color and the stronger emission intensity of the pigment particles.

The body color of indium sulfide pigment particles of the present invention is found red, while europium activated yttrium oxysulfide (Y₂O₂S:Eu) phosphor is found red-emitting. Accordingly, the body color and the emission intensity of the pigment particles may be adjustable by controlling the mixing ratio of yttrium oxide and indium oxide.

The preferable mixing ratios, considering the above-mentioned characteristics, showing suitable body color and emission intensity are as follows: 41 to 17 weight percent for yttrium oxide and 59 to 83 weight percent for indium oxide.

The preferred added amount of an activator, europium oxide (Eu₂O₃) is from 0.1 to 9 weight percent based on 100 weight percent of yttrium oxide as determined by the above-mentioned mixing ratio. The more preferred amount ranges from 3 to 6 weight percent.

Europium component in europium oxide is a red-emitting component of the pigment particles of the present invention, and the red-emitting color index of the pigment varies in accordance with the amount of europium oxide added. If the amount of europium oxide decreases, x coordinate in the Standard Chromacity Diagram System CIE for emission color of the pigment shifts toward the left side and the pigment emits light in an orange region. On the contrary, if the amount of europium oxide increases, the pigment emits light in the deep red color region.

The reason why the amount of the activator (Eu₂O₃) varies in the above-mentioned range is that the amount added depends on the mixing ratio of the starting materials Y₂O₃ and In₂O₃, when manufacturing the pigment.

For example, when the relative amount of yttrium oxide exceeds that of indium oxide, the amount of europium oxide should be increased for emission of deep color to counterbalance light body color and when the relative amount of indium oxide exceeds that of yttrium oxide, the amount of europium oxide should be decreased for light emission color to counterbalance deep body color.

Adequate amounts of indium oxide, yttrium oxide and europium oxide are placed in a heat-resistant alumina tube, and both ends of the tube are sealed. The content is baked at a temperature range of 700 to 950°C under a 99.99% H₂S gas atmosphere. If the baking is carried out at a temperature lower than 700°C, the oxides decompose to produce undesirable activated materials and these can not react with H₂S gas. And if the baking is carried out at a temperature higher than 950°C indium oxide sublimates and reacts with reactive hydrogen sulfide gas to produce bulk polycrystal without any fragments. Therefore, the above-mentioned temperature range is preferable.

The preferable baking time ranges from 2 to 8 hours. If the baking is carried out for more than 8 hours, crude particles are synthesized owing to excessive sintering. And if the baking is carried out for less than 2 hours, unreacted starting material remains.

### (2) manufacturing of a red pigment coated phosphor.

First, red-emitting, red-colored pigment particles are dispersed in pure water to prepare a pigment dispersion. And europium activated yttrium oxysulfide (Y₂O₂S:Eu) phosphor, europium activated yttrium oxide (Y₂O₃:Eu) phosphor or europium activated yttrium vanadate (YVO₄:Eu) phosphor particles are dispersed in pure water to prepare a phosphor dispersion. To the pigment dispersion is added the phosphor dispersion while stirring the mixture using a stirrer for 0.5 to 1 hour until it is sufficiently, uniformly dispersed. To the mixture is added 0.5 to 5 ml of 2% acryl emulsion, drop by drop, and the resultant mixture is stirred for 1 to 2 hours. The resultant mixture is adjusted to a pH value of 3 by adding H₂SO₄ to coat the phosphor with the pigment and to cure the binder. The mixture is allowed to stand and then the resultant supernatant is removed by decantation. After washing 3 or 4 times with pure water and drying, the pigment coated phosphor of the present invention is obtained.

Acryl emulsion is employed in the process not only as a binder but also as an anti-oxidizing agent during the baking process by coating the pigment particles. That is, the coated and cured acryl emulsion imparts heat-resistance to the pigment particles.

The present invention will be explained in more detail with reference to the examples below.

### Example 1

300g of Yttrium oxide (Y₂O₃), 210g of Indium oxide (In₂O₃) and 15g of Europium oxide (Eu₂O₃) were dry mixed. The mixture was placed in an alumina tube and baked at 850°C for 4 hours under an H₂S gas-atmosphere to produce a red pigment (#NP11-1) of the present invention.

1.5g (0.5 weight percent based on the phosphor) of the obtained #NP11-1 pigment was pulverized by means of a ball mill and was dispersed in 100ml of pure water to obtain a pigment dispersion, In 1l of pure water, 300g of white-colored Y₂O₂S:Eu phosphor was dispersed to obtain a phosphor dispersion.

The phosphor dispersion was added to the pigment dispersion and the mixture was stirred for 1 hour. To the resultant mixture was added 1 ml of 2% acryl emulsion and the mixture was sufficiently mixed using a stirrer for 1 hour. The resultant mixture was adjusted to a pH value of 3 by adding H₂SO₄ to coat the phosphor with the pigment and to cure the binder. The mixture was allowed to stand and then the resulting supernatant was removed by decantation. After washing with water 3 times, the precipitate was filtered and dried at 110°C for 15 hours to give a red pigment coated phosphor of the present invention.

### Example 2

The procedure was carried out in the same manner as in Example 1, except that the amount of In₂O₃ was 150g to give a pigment (#NP11-2) of the present invention, and that the amount of the pigment (#NP11-2) added was 1.5g to give a red pigment coated phosphor of the present invention.

### Example 3

The procedure was carried out in the same manner as in Example 1, except that the amount of In₂O₃ was 90g to give a pigment (#NP11-3) of the present invention and that the amount of the pigment (#NP11-3) added was 1.5g to give a red pigment coated phosphor of the present invention.

### Example 4

The procedure was carried out in accordance with that in Example 1, except that the amount of In₂O₃ was 60g to give a pigment (#NP11-4) of the present invention, and that the amount of the pigment (#NP11-4) added was 1.5g to give a red pigment coated phosphor of the present invention.

### Example 5

The procedure was carried out in accordance with that in Example 1, except that the amount of the pigment (#NP11-1) added was 0.69g(0.23 weight percent based on the phosphor) to give a red pigment coated phosphor of the present invention.

### Example 6

300g of Indium oxide (In₂O₃), 210g of Yttrium oxide (Y₂O₃) and 15g of Europium oxide (Eu₂O₃) were dry mixed. The mixture was placed in an alumina tube and baked at 850°C for 4 hours under H₂S gas atmosphere to produce a red pigment (#NP11-5) of the present invention.

0.5g of the obtained pigment (#NP11-5) was pulverized by means of a ball mill and was dispersed in 100ml of pure water to prepare a pigment dispersion.

In 1l of pure water, was dispersed 300g of white-colored Y₂O₂S:Eu phosphor to obtain a phosphor dispersion.

To the pigment dispersion was added the aforementioned phosphor dispersion and the mixture was stirred for 1 hour. To the resulting mixture was added 1ml of 2% acryl emulsion and the mixture was sufficiently mixed with a stirrer for 1 hour. The resulting mixture was adjusted to a pH value of 3 by adding H₂SO₄ to coat the phosphor with the pigment and to cure the binder. The mixture was allowed to stand and then the resulting supernatant was removed by decantation. After washing with water 3 times, the precipitate was filtered and dried at 110°C for 15 hours to give a red pigment coated phosphor of the present invention.

### Example 7

The procedure was carried out in accordance with that in Example 6, except that the amount of Y₂O₃ was 150g to give a pigment (#NP11-6) of the present invention, and that the amount of the pigment (#NP11-6) added was 0.45g to give a red pigment coated phosphor of the present invention.

### Example 8

The procedure was carried out in accordance with that in Example 6, except that the amount of Y₂O₃ was 90g to give a pigment (#NP11-7) of the present invention, and that the amount of thus obtained pigment (#NP11-7) added was 0.54g to give a red pigment coated phosphor of the present invention.

### Example 9

The procedure was carried out in accordance with that in Example 6, except that the amount of Y₂O₃ was 60g to give a pigment (#NP11-8) of the present invention, and that the amount of the pigment (#NP11-8) added was 0.15g to give a red pigment coated phosphor of the present invention.

### Example 10

The procedure was carried out in accordance with that in Example 8, except that the amount of #NP11-7 added was 0.96g to give a red pigment coated phosphor of the present invention.

The mixing ratio of the starting materials are illustrated in Table 1 and 2.

**Table 1**

| Example No. | specimen | Y₂O₃ (g) | In₂O₃ (g) | Eu₂O₃ (g) | Y₂O₃ + In₂O₃ total weight (100%) | |
|---|---|---|---|---|---|---|
| | | | | | Y₂O₃ weight(%) | In₂O₃ weight(%) |
| 1 | #NP11-1 | 300 | 210 | 15 | 59 | 41 |
| 2 | #NP11-2 | 300 | 150 | 15 | 67 | 33 |
| 3 | #NP11-3 | 300 | 90 | 15 | 77 | 23 |
| 4 | #NP11-4 | 300 | 60 | 15 | 83 | 17 |

**Table 2**

| Example No. | specimen | Y₂O₃ (g) | In₂O₃ (g) | Eu₂O₃ (g) | Y₂O₃ + In₂O₃ total weight (100%) | |
|---|---|---|---|---|---|---|
| | | | | | Y₂O₃ weight(%) | In₂O₃ weight(%) |
| 6 | #NP11-5 | 210 | 300 | 15 | 41 | 59 |
| 7 | #NP11-6 | 150 | 300 | 15 | 33 | 67 |
| 8 | #NP11-7 | 90 | 300 | 15 | 23 | 77 |
| 9 | #NP11-8 | 60 | 300 | 15 | 17 | 83 |

### Comparative Example

In 600ml of pure water, 1.8g of gellatin was dispersed and the dispersion was heated to a temperature of 40°C to prepare a 0.3% aqueous gellatin solution. To the 0.3% aqueous gellatin solution was added 300g of Y₂O₂S:Eu phosphor and the resultant mixture was sufficiently mixed with a stirrer until the mixture became uniform.

In 400ml of pure water, 1.2g of gum arabic was dispersed and the dispersion was heated to a temperature of 40°C to prepare a 0.3% aqueous gum arabic solution. To the 0.3% aqueous gum arabic solution, was added 0.48g (0.16 weight percent based on the phosphor) of red Fe₂O₃ pigment and the resultant mixture was sufficiently mixed with a stirrer to obtain a pigment dispersion.

Then, thus obtained phosphor dispersion was mixed with the pigment dispersion, and the pH of the mixture was adjusted to 6 while stirring. The mixture was allowed to stand and then the supernatant was removed by decantation. After washed several times with water, the precipitate was dried at a temperature of 100°C until the weight of which became constant to obtain a completely dried pigment coated phosphor.

Emission luminance and emission color points in the standard Chromaticity Diagram System CIE of the conventional Fe₂O₃ and the pigments according to the present invention are illustrated in Table 3 and 4.

**Table 3**

| pigment | | phosphor | Emission Luminance (%) | CIE Coordinates | |
|---|---|---|---|---|---|
| specimen | Amount of adhesion(wt%) | | | x | y |
| Fe₂O₃ | 0.16 | Y₂O₂S:Eu | 100 | 0.6272 | 0.3575 |
| #NP11-1 | 0.23 | Y₂O₂S:Eu | 107 | 0.6287 | 0.3571 |
| | 0.5 | Y₂O₂S:Eu | 99.5 | 0.6279 | 0.3568 |

**Table 4**

| pigment | | phosphor | Emission Luminance (%) | CIE Coordinates | |
|---|---|---|---|---|---|
| specimen | Amount of adhesion(wt%) | | | x | y |
| Fe₂O₃ | 0.16 | Y₂O₂S:Eu | 100 | 0.6273 | 0.3572 |
| #NP11-7 | 0.16 | Y₂O₂S:Eu | 112 | 0.6298 | 0.3564 |
| | 0.32 | Y₂O₂S:Eu | 106 | 0.6302 | 0.3551 |

Results illustrated in Table 3 and 4 were obtained from pigment coated phosphors manufactured by adhering the conventional iron oxide (Fe₂O₃) pigment to the phosphor as described in the Comparative Example, and from pigment coated phosphors of the present invention manufactured according to the Examples 1, 5, 8 and 10. The emission spectrum was detected by means of a Demountable System.

As shown in Table 3 and 4, the amount of adhesion of the red-emitting red-colored pigment particles of the present invention to the phosphor was one and half to three times more than that of the conventional ones. However, the emission luminance of the pigment coated phosphor of the present invention increased up to 12%. Since the pigment of the present invention could radiate for itself, increased amount of the pigment of the present invention causes increase in emission luminance. Another reason for increase in emission luminance is as follows. In₂S₃, which has high electric conductivity contained in the pigment particles, decreases charge up occurring on a screen when stimulated by an electron beam, and thus enhancing emission efficiency and emission luminance.

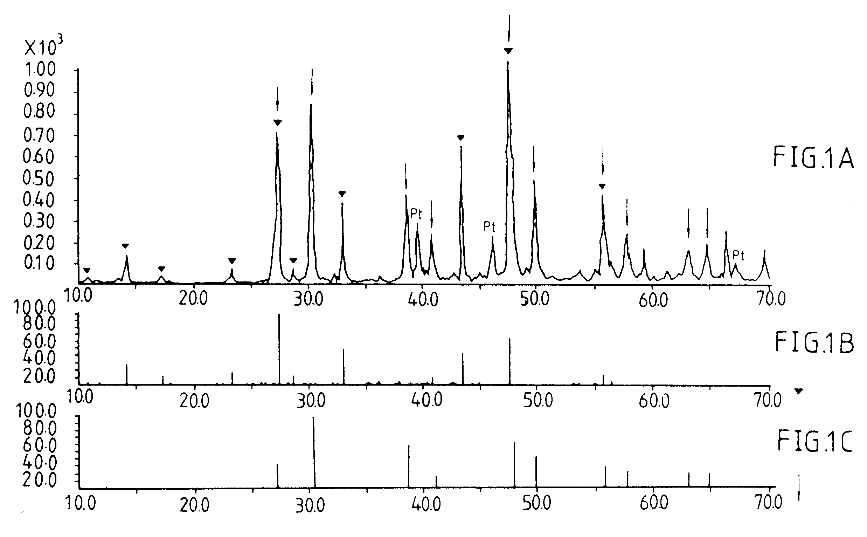

Figure 1A illustrates a XRD diffraction pattern of a crystal phase of the pigment particles according to the present invention, Figure 1B illustrates a XRD diffraction pattern of a crystal phase of In₂S₃ recorded in the JCPDS-file as a standard material, and Figure 1C illustrates a XRD diffraction pattern of a crystal phase of Y₂O₂S.

As shown in Figure 1, the crystal phase of the pigment according to the examples of the present invention exists as a mixture of Y₂O₂S and In₂S₃.

Here, Y₂O₂S actually exists as a europium activated form, i.e., Y₂O₂S:Eu. However, it is difficult to differentiate Y₂O₂S from Y₂O₂S:Eu by means of XRD diffraction data. In order to differentiate this from that, investigation was executed on whether the material emits light or not when it is stimulated by an electron beam. If the material emits light, it is determined to be Y₂O₂S:Eu, and if the material does not emit light, it is Y₂O₂S. Otherwise, a europium ion can be detected by wet analysis. All the pigments obtained from the examples of the present invention emit light: therefore, the pigments must be mixtures of Y₂O₂S:Eu and In₂S₃.

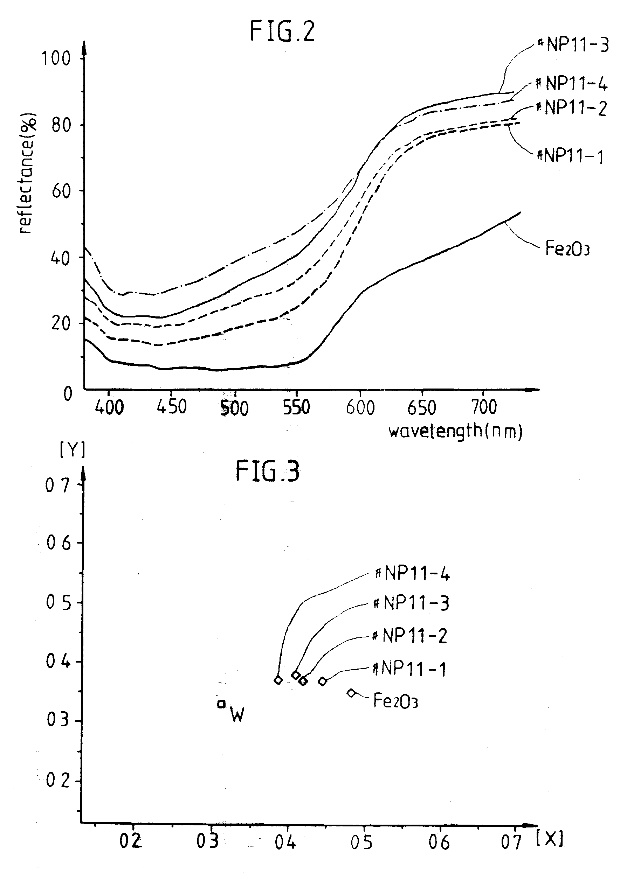

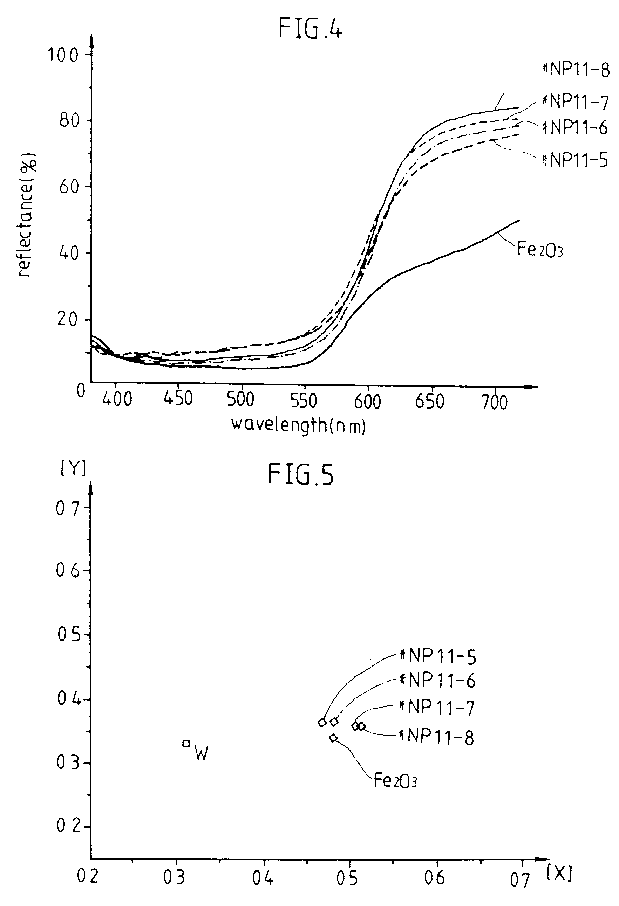

Figures 2 and 4 are graphs showing the relationship between the reflectances and the wavelengths of Fe₂O₃ and of pigment particles according to the present invention.

As shown in Figures 2 and 4, the pigment particles according to the present invention have 10 to 30% higher reflectance than that of Fe₂O₃ throughout the whole wavelength region. And when comparing Figure 2 with Figure 4, pigment particles having more Y₂O₃ (Table 1,Figure 2) show higher reflectance than those having less Y₂O₃ (Table 2,Figure 4).

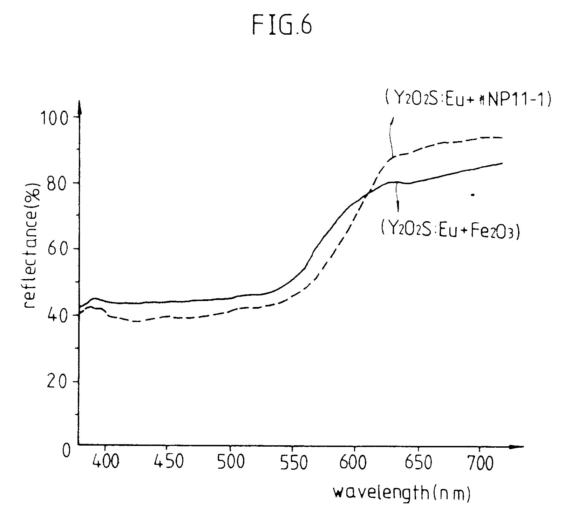

Figures 3 and 5 are color point regions of Fe₂O₃ and of pigment particles of the present invention on the coordinates of the standard Chromaticity Diagram System CIE when exposed to the standard D65 light.

As shown in Figures 3 and 5 the above-mentioned pigments have red body colors deeper than, or almost same as, Fe₂O₃ pigment. And when comparing Figure 3 with Figure 5, pigment particles having more In₂O₃(Table 2, Figure 5) show redder color than those having less In₂O₃(Table 1, Figure 3).

Figure 6 is a graph showing the relationship between the reflectances and the wavelengths of Y₂O₂S:Eu phosphor coated with Fe₂O₃ and with pigment particles according to the present invention.

As shown in Figure 6, the reflectance of the pigment coated phosphor of the present invention is higher in the 600nm and higher wavelength region, and is lower in lower wavelength than 600nm region, thus the contrast of the reproduced image increases. The phosphor coated with the pigments of the present invention has 10 to 30% higher contrast effect than that of Fe₂O₃ coated phosphor.

As described above, the pigment employed in the present invention is a mixture of Y₂O₂S:Eu and In₂S₃, and the phosphor coated with the pigment highly enhances contrast and luminance when employed in a cathode ray tube.

## Claims

1. A red pigment coated phosphor comprising a red phosphor and pigment particles which are coated on the surface of said phosphor, wherein said pigment is a mixture of Indium sulfide (In₂S₃) and europium activated yttrium oxysulfide (Y₂O₂S:Eu).

2. A red pigment coated phosphor as claimed in claim 1, wherein said phosphor is at least one selected from the group consisting of Y₂O₂S:Eu, Y₂O₃:Eu and YVO₄:Eu.

3. A red pigment coated phosphor as claimed in claim 1, wherein the amount of the pigment is 0.1 to 10 weight percent based on the phosphor.

4. A method for manufacturing a red pigment coated phosphor including steps of adding pigment particles and binders to a red-emitting phosphor, wherein the method for manufacturing said pigment particles comprises the following steps of dry mixing indium oxide(In₂O₃), yttrium oxide(Y₂O₃) and europium oxide(Eu₂O₃) and baking the mixture at a temperature range of 700 to 950°C for 2 to 8 hours under H₂S atmosphere.

5. A method for manufacturing a red pigment coated phosphor as claimed in claim 4, wherein said binder is acryl emulsion.

6. A method for manufacturing a red pigment coated phosphor as claimed in claim 4, wherein the mixing ratio of said Y₂O₃ and In₂O₃ is in the range of 17:83 to 83:17 as a weight percent based on their total amount.

7. A method for manufacturing a red pigment coated phosphor as claimed in claim 6, wherein the mixing ratio of said Y₂O₃ and In₂O₃ is in the range of 41:17 to 59:83 as a weight percent based on their total amount.

8. A method for manufacturing a red pigment coated phosphor as claimed in claim 4, wherein the amount of said europium oxide is 0.1 to 9 weight percent based on 100 weight percent of said yttrium oxide.

9. A method for manufacturing a red pigment coated phosphor as claimed in claim 8, wherein the amount of said europium oxide is 3 to 6 weight percent based on 100 weight percent of said yttrium oxide.

## Patentansprüche

1. Roter mit Pigment überzogener Leuchtstoff mit einem roten Leuchtstoff und Pigmentteilchen, die als Überzug auf der Oberfläche des Leuchtstoffes aufgebracht sind, wobei das Pigment ein Gemisch von Indiumsulfid (In₂S₃) und von mit Europium aktiviertem Yttriumoxysulfid (Y₂O₂S : Eu) ist.

2. Roter mit Pigment überzogener Leuchtstoff nach Anspruch 1, bei dem der Leuchtstoff wenigstens einer ist, der aus der Gruppe Y₂O₂S : Eu, Y₂O₃ : Eu und YVO₄ : Eu ausgewählt ist.

3. Roter mit Pigment überzogener Leuchtstoff nach Anspruch 1, bei dem die Menge des Pigmentes 0,1 bis 10 Gew.-%, bezogen auf den Leuchtstoff, ist.

4. Verfahren zur Herstellung eines roten mit Pigment überzogenen Leuchtstoffes mit den Stufen, in denen man Pigmentteilchen und Bindemittel zu einem rot emittierenden Leuchtstoff zugibt, wobei das Verfahren zur Herstellung der Pigmentteilchen die aufeinanderfolgenden Stufen eines trockenen Vermischens von Indiumoxid (In₂O₃), Yttriumoxid (Y₂O₃) und Europiumoxid (Eu₂O₃) und eines Brennens des Gemisches in einem Temperaturbereich von 700 bis 950 °C während 2 bis 8 h unter einer H₂S-Atmosphäre umfaßt.

5. Verfahren zur Herstellung eines roten mit Pigment überzogenen Leuchtstoffes nach Anspruch 4, bei dem das Bindemittel eine Acrylemulsion ist.

6. Verfahren zur Herstellung eines roten mit Pigment überzogenen Leuchtstoffes nach Anspruch 4, bei dem das Mischungsverhältnis des Y₂O₃ und In₂O₃ im Bereich von 17 : 83 bis 83 : 17 als Gewichtsprozente, bezogen auf ihre Gesamtmenge, ist.

7. Verfahren zur Herstellung eines roten mit Pigment überzogenen Leuchtstoffes nach Anspruch 6, bei dem das Mischungsverhältnis des Y₂O₃ und In₂O₃ im Bereich von 41 : 17 bis 59 : 83 als Gewichtsprozente, bezogen auf ihre Gesamtmenge, ist.

8. Verfahren zur Herstellung eines roten mit Pigment überzogenen Leuchtstoffes nach Anspruch 4, bei dem die Menge des Europiumoxids 0,1 bis 9 Gew.-%, bezogen auf 100 Gew.-% des Yttriumoxids, beträgt.

9. Verfahren zur Herstellung eines roten mit Pigment überzogenen Leuchtstoffes nach Anspruch 8, bei dem die Menge des Europiumoxids 3 bis 6 Gew.-%, bezogen auf 100 Gew.-% des Yttriumoxids, beträgt.

## Revendications

1. Luminophore rouge revêtu d'un pigment, comprenant une substance luminescente émettant dans le rouge et des particules de pigment qui sont appliquées sur la surface de ladite substance luminescente, dans lequel le pigment est un mélange de sulfure d'indium (In₂ S₃) et d'oxysulfure d'yttrium activé par l'europium (Y₂O₂S:Eu).

2. Luminophore rouge revêtu d'un pigment selon la revendication 1, dans lequel la substance luminescente est au moins l'une choisie dans le groupe comprenant Y₂O₂S:Eu, Y₂O₃:Eu et YVO₄:Eu.

3. Luminophore rouge revêtu d'un pigment selon la revendication 1, dans lequel la quantité du pigment est 0,1 à 10% en poids sur la base de la substance luminescente.

4. Procédé pour préparer un luminophore rouge revêtu d'un pigment, comprenant les étapes dans lesquelles on ajoute des particules de pigment et des liants à une substance luminescente émettant dans le rouge, dans lequel le procédé pour fabriquer les particules de pigment comprend les étapes suivantes : mélanger à sec de l'oxyde d'indium (I₂O₃), de l'oxyde d'yttrium (Y₂O₃) et de l'oxyde d'europium (Eu₂O₃) et cuire le mélange à une température comprise entre 700 et 950°C pendant 2 à 8 heures dans une atmosphère de H₂S.

5. Procédé pour préparer un luminophore rouge revêtu d'un pigment selon la revendication 4, dans lequel le liant est une émulsion acrylique.

6. Procédé pour préparer un luminophore rouge revêtu d'un pigment selon la revendication 4, dans lequel le rapport de mélange de Y₂O₃ et de In₂O₃ est compris entre 17:83 et 83:17, en pourcentage en poids sur la base de leur quantité totale.

7. Procédé pour préparer un luminophore rouge revêtu d'un pigment selon la revendication 6, dans lequel le rapport de mélange de Y₂O₃ et de In₂O₃ est compris entre 41:17 et 59:83, en pourcentage en poids sur la base de leur quantité totale.

8. Procédé pour préparer un luminophore rouge revêtu d'un pigment selon la revendication 4, dans lequel la quantité d'oxyde d'europium est 0,1 à 9% en poids sur la base de 100% en poids d'oxyde d'yttrium.

9. Procédé pour préparer un luminophore rouge revêtu d'un pigment selon la revendication 8, dans lequel la quantité d'oxyde d'europium est 3 à 6% en poids sur la base de 100% en poids d'oxyde d'yttrium.
